# EUROPÄISCHE PATENTANMELDUNG

(11) **EP 0 990 936 A1**
(43) Veröffentlichungstag der Anmeldung: **05.04.2000**
(21) Anmeldenummer: 98118540.8
(22) Anmeldetag: 30.09.1998
(51) Int. Cl.: G02B 21/00

(54) **In situ Mikroskopsonde für die Partikelmesstechnik**

(71) Anmelder: Suhr, Hajo, Prof. Dr., 69120 Heidelberg (DE)
(72) Erfinder: Suhr, Hajo, Prof. Dr., 69120 Heidelberg (DE)
(74) Vertreter: Meyer-Roedern, Giso, Dr.

(57) **Zusammenfassung**

Eine Sonde zur in situ Mikroskopie von bewegten Partikeln direkt in einer Partikeldispersion hat eine gepulste Lichtquelle, eine Mikroskopoptik und eine Kamera. Die Lichtquelle besteht aus wenigstens einer LED (Elektrolumineszenzdiode), die mit kurzen elektrischen Strompulsen von typisch 1 µs Dauer oder darunter bei einer Stromstärke von mehr als dem hundertfachen des Gleichstromnennwerts des LED-Herstellers betrieben wird.

## Beschreibung

Bewegte Partikel in disperser Verteilung müssen zur Beherrschung vieler technischer und industrieller Prozesse meßtechnisch erfaßt und charakterisiert werden. Beispielsweise fallen in diese Kategorie gerührte Suspensionen, Emulsionen, Aerosole, Staub, Schaum und geschüttete Materialien.

Eine bekannte Technik zur Bestimmung der Morphologie und Konzentration disperser Partikel ist der direkte Einbau eines Mikroskops zur Beobachtung der Partikel "in situ", direkt im Prozeß. Dieses Verfahren wird unter der Bezeichnung "In situ Mikroskopsonde" dargestellt in der deutschen Patentschrift DE 40 32 002 C2 sowie in der Zeitschrift "Biotechnology & Bioengineering" Jahrgang 1995, Band 47, Seiten 106 bis 116.

Die dort beschriebene Meßvorrichtung besteht aus einem Videomikroskop, das mit dem Objektiv direkt in die bewegte Partikel-Dispersion hineinsieht und bei gepulster Belichtung scharfe mikroskopische Bilder bewegter Partikel in einem schmalen Probevolumen erzeugt. Das Meßvolumen wird entweder mechanisch begrenzt oder bildet sich infolge des Sichtausschnitts und der begrenzten Schärfentiefe des Mikroskops von selbst als virtuell begrenztes Volumen heraus.

Vorteilhaft für die letztere Version des In situ Mikroskops ist der Verzicht auf bewegliche mechanische Teile und die somit stark verminderte Störanfälligkeit. Ihr Problem ist jedoch die ungebremste schnelle Bewegung der Partikel durch das Probevolumen hindurch, denn die Partikelbewegung ruft eine im mikroskopischem Maßstab beträchtliche photographische Bewegungsunschärfe hervor. Die Kontur eines Partikels beispielsweise, welches sich mit einer Geschwindigkeit von 1 m/s fortbewegt, verwischt sich in einer Mikrosekunde bereits um 1 µm. Um also das Auflösungsvermögen des Mikroskops nicht wesentlich zu beeinträchtigen, sind Belichtungszeiten von typisch einer Mikrosekunde oder darunter notwendig.

Um die Belichtung einer normal empfindlichen Videokamera durch das Mikroskopbild sicherzustellen, wird trotz der kurzen Belichtungszeiten eine beträchtliche Puls-Energie von ca. 0,5 Mikrojoule gebündelt auf einer Objektfeld-Fläche von ca. 0,1 bis 1,0 mm² verlangt. Diese hohe Lichtleistung in Verbindung mit den verlangten kurzen Pulszeiten konnte in der In situ Mikroskopie bislang nur mit gepulsten Laserlichtquellen realisiert werden - also mit erheblichem apparativen Aufwand. Der Aufwand für Laserbelichtung wird noch durch die hohe Kohärenz des Laserlichtes erhöht. Kohärenz ruft störende Beugungsphänomene im Mikroskopbild hervor ("Speckles"), die durch zusätzliche Maßnahmen verringert werden oder aber in der Bildverarbeitung mit vermehrter Rechenzeit herausgerechnet werden müssen.

Die Erfindung vereinfacht die Belichtung für das In situ Mikroskop. Es wird eine gepulste Belichtung des In situ Mikroskops mit Elektrolumineszenz-Dioden (LED-Dioden) offenbart. Die Belichtung mit LED-Dioden bringt entscheidende technische Vorteile:
- sehr geringer Raum- und Energiebedarf, ideal für kompakte und mobile Meßsonden;
- keine Wartungsprobleme, anspruchsloser Betrieb;
- Niedervoltbetrieb;
- gute Pulsbarkeit, keine störende Interferenz (Speckles) durch Laserkohärenz;
- sehr geringe Kosten.

LED-Dioden sind allerdings bei Standard-Betriebsströmen, die vom Hersteller spezifiziert werden, oft nicht ausreichend hell, um damit ein gepulstes In situ Mikroskop mit einer Standard-Kamera ohne Lichtverstärker zu betreiben, beispielsweise einer Charged Coupled Device - (CCD-) Kamera.

Um auch in diesem Fall, der beispielsweise bei schwach kontrastierenden Bioorganismen in Wasser auftritt, die LED Belichtung für die In situ Mikroskopie zu realisieren, wird der LED-Diode ein kurzer starker Strompuls in Durchlaßrichtung eingeprägt, der gemessen an der Diodenspezifikation eine grobe Überlast darstellt. Bei einem derartigen Stromimpuls emittiert die Diode kurze intensive Lichtpulse, die auch schwach kontrastierende Partikel im In situ Mikroskop mit Standard-Kamera sichtbar macht. Die Zerstörung der Diode kann durch die Kürze der eingeprägten Strompulse vermieden werden.

Aufgrund der LED-Belichtung kann das gesamte In situ Mikroskop sehr kompakt gebaut und konsequent als autonom funktionsfähige, tragbare Meßsonde ausgestaltet werden. Bei einer bevorzugten Ausführungsform wird die automatische Bildverarbeitung durch einen in der Kamera integrierten digitalen Signalprozessor geleistet (Solche "intelligenten Kamerasysteme" sind heute von mehreren Herstellern erhältlich). Das offenbarte System stellt damit einen sehr kompakten, mobilen und autonomen Partikelsensor dar, der auch ohne externen Computer in der Lage ist, Bilder und Meßparameter der dispergierten Partikel für die Prozeßbeobachtung und Prozeßsteuerung zu liefern.

Zur Bündelung des LED-Lichtes in das Probevolumen vor dem Objektiv sind verschiedene Verfahren und Vorrichtungen geeignet.

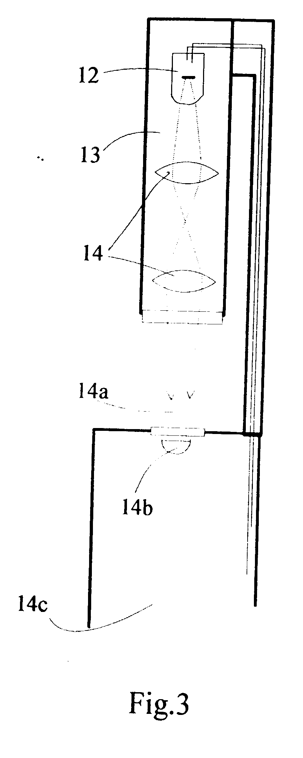

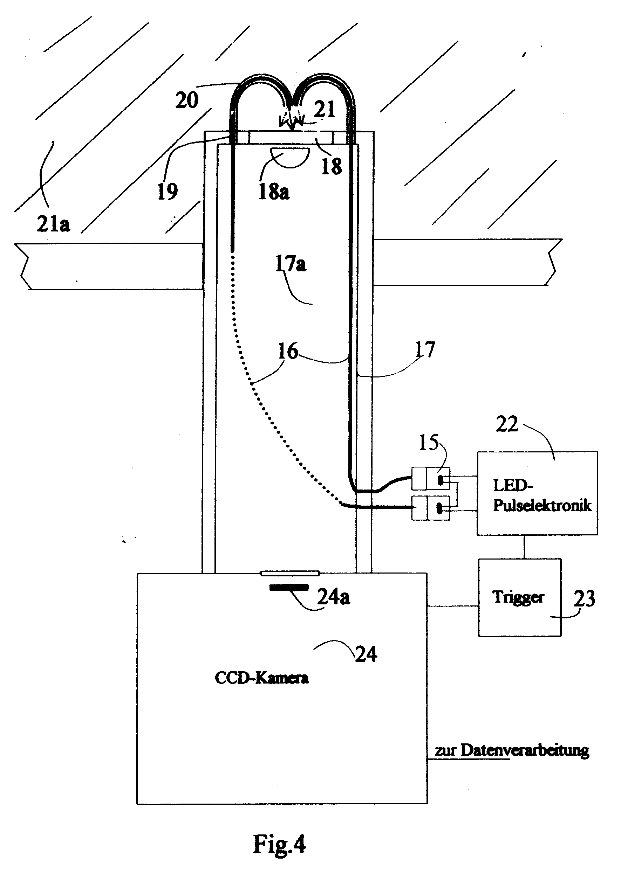

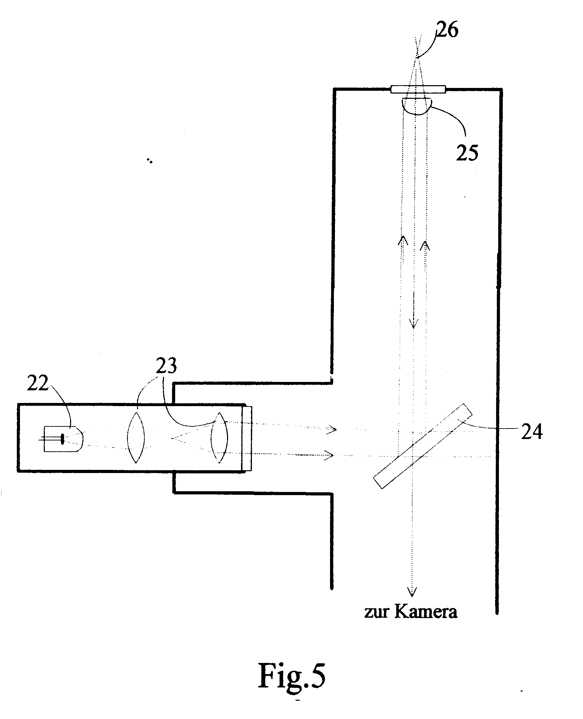

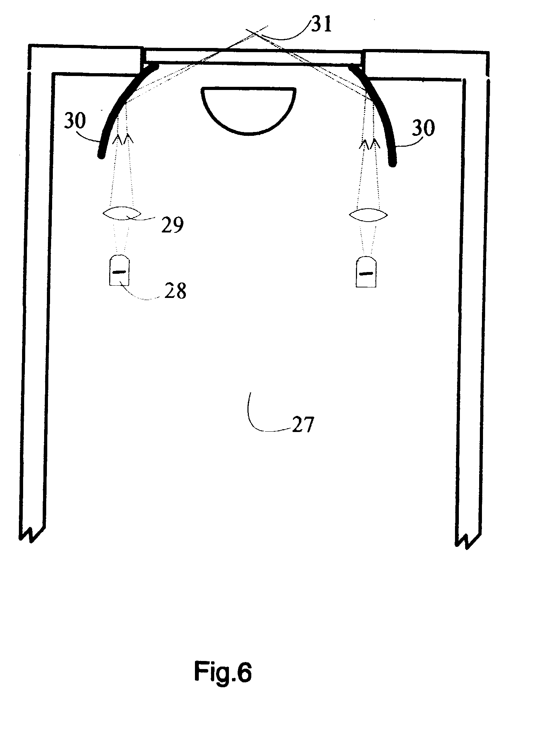

Lichtleiter (Fig. 4) sind zur Hinführung des LED-Lichtes zur Objektebene des In situ Mikroskops ebenso geeignet wie Kondensoroptiken mit Linsen und Spiegeln (Fig. 3). Auch Auflichtbelichtung mit LED-Dioden ist ein geeignetes Verfahren.

Falls die thermischen und chemischen Bedingungen in der Partikeldispersion es erlauben, ist es vorteilhaft, die Emissionsfläche der LED-Diode so nahe an das mikroskopierte Volumen heranzuführen, daß trotz Strahldivergenz das Diodenlicht auch ohne Fokussierung noch ausreichend hell zur Belichtung ist. Der Vorteil dieses Verfahrens liegt im möglichen Verzicht auf zusätzliche Belichtungsoptik.

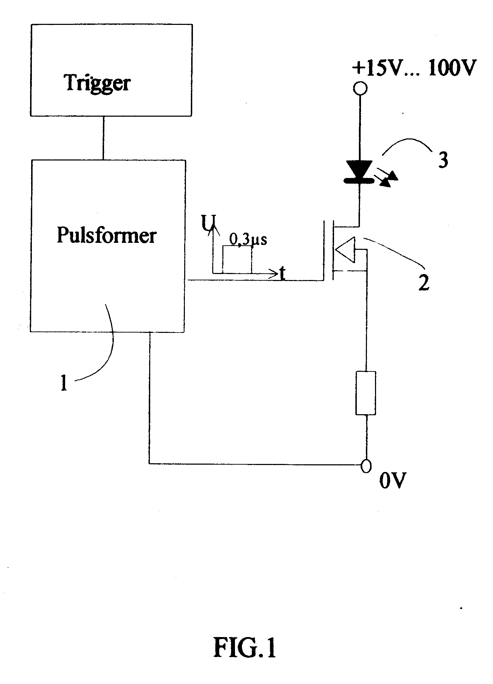

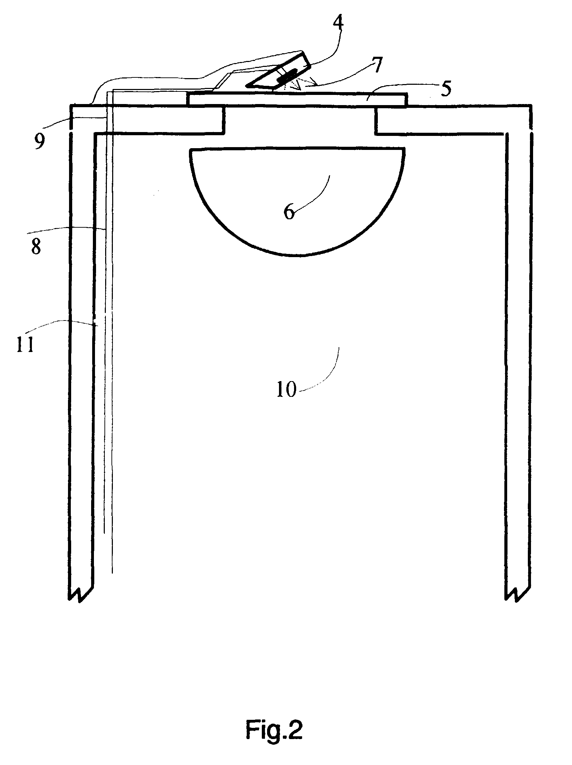

Eine vorteilhafte Ausgestaltung eines In situ Mikroskops mit LED-Dioden als Lichtquelle wird exemplarisch anhand der Zeichnung Fig. 4 für den Gesamtaufbau und Fig. 1 für die Elektronik dargestellt.

Seitlich am Mikroskoptubus 17a in Fig. 4 befinden sich LED-Dioden 15. Das emittierte Licht der Dioden gelangt über Einkoppeloptiken in die Lichtfasern 16. Diese werden am inneren Rand 17 des Tubus bis zum Sichtfenster 18 am Objektiv 18a geführt. Durch Bohrungen 19 in der Stirnseite des Tubus gelangen die Lichtfasern in die Partikeldispersion 21a und werden dort in Kapillaren 20 dergestalt geführt, daß sie aus definierten Richtungen in das Probevolumen 21 strahlen.

Wahlweise kann die Lichtfaseremission durch miniaturisierte Auskoppeloptiken am Ende der Führungskapillaren gebündet werden.

An den Partikeln gestreutes Licht aus den Lichtfasern erzeugt mit Hilfe des Objektivs 18a reelle Partikelbilder auf der Sensorfläche 24a einer CCD-Kamera. Das Kamerasignal wird der automatischen Bildverarbeitung zugeleitet. Auf einem Monitor erscheint das Bild der Partikel in Echtzeit.

Die Öffnungszeit der Kamera wird von einer Triggerelektronik 23 mit den Pulsen der LED-Dioden 15 synchronisiert.

Der Schaltplan der Pulselektronik 22 ist in Fig. 1 dargestellt. Von einem Trigger werden Pulse erzeugt, die in einer weiteren Schaltungsstufe 1 belastbare Steuerpulse mit definierter Zeitdauer <1 µs auslösen. Diese Steuerpulse steuern das Gate eines Feldeffekt-Transistors (MOSFET) 2 auf Durchlaß.

Über die geöffente Transistorstrecke werden der LED-Diode 3 durch die angelegte Spannung Pulsströme von ca. 5 A eingeprägt.

Die Dauer der Ströme ist zu begrenzen, um die LED-Diode 3 nicht zu zerstören. Die hohen Pulsströme erzeugen kurzzeitige Lichtpulse von ca. 0,5 W, also von etwa einer Größenordnung über der Nennleistung lichtstarker käuflicher LED-Dioden. Diese Lichtenergie ist für die Belichtung der Mikroskop-Kamera auch bei starker Mikroskopvergrößerung ausreichend.

Ein Verfahren zur In situ-Abbildung bewegter Partikel in dispersen Verteilungen wie beispielsweise in Suspensionen, Emulsionen, Aerosolen, Stäuben, Schäumen, Blasenverteilungen und Schüttungen mit Hilfe einer In situ Mikroskopsonde hat folgende charakteristische Merkmale:
- Das In situ Mikroskop wird mit Hilfe einer LED-Diode (Elektrolumineszenz-Diode) oder mehrerer synchronisierter LED-Dioden gepulst belichtet.
- Zur Bilderfassung dient eine Videokamera ohne Lichtverstärker, beispielsweise eine handelsübliche CCD-Kamera mit Standard-Lichtempfindlichkeit.

Das Verfahren hat weiter die folgenden charakteristischen Merkmale:
- In die LED-Dioden des In situ Mikroskops werden Pulsströme eingeprägt, deren Stärke (beispielsweise 10 A) bis zu Größenordnungen über der Nennstrom-Angabe des Herstellers liegen.
- Die Pulsdauer wird zur Erzielung kurzer Belichtungszeiten und langer Dioden-Lebensdauern elektronisch präzise eingestellt, beispielsweise auf 0,3 Mikrosekunden.

Das Verfahren hat weiter die folgenden charakteristischen Merkmale:
- Die Ausgestaltung des In situ Mikroskops mit LED-Belichtung und mit handelsüblicher Kamera mit interner Signalverarbeitung ergibt eine kompakte, autonome und mobile Meßsonde für Partikel, die benutzt werden kann ohne zusätzliche Hilfsapparaturen wie etwa externe Computer.
- In dem In situ Mikroskop ist eine handelsübliche "intelligente Kamera" mit integriertem und programmierbaren digitalen Signalprozessor eingebaut.
- Der kamerainterne Signalprozessor übernimmt die Steuerung des CCD-Chips und die automatische Bildverarbeitung.
- Der kamerainterne Signalprozessor berechnet je nach Programmierung charakteristische Partikelparameter wie beispielsweise die Anzahl scharf abgebildeter Partikel oder den mittleren Flächeninhalt der Partikelbilder als Größenmaß.
- Die berechneten Parameterwerte werden direkt am Kameragehäuse auf einem Display dargestellt und als analoge Signale für Steuerung und Regelung zur Verfügung gestellt.
- Die Kamera erzeugt auf Abruf ein stehendes Mikroskopbild der Partikel direkt auf einem Videomonitor, der wahlweise auch miniaturisiert und im Sondengehäuse integriert sein kann.

Das Verfahren hat weiter die folgenden charakteristischen Merkmale:
- Die Emission der Dioden wird direkt oder über plane Spiegel in das mikroskopierte Volumen eingestrahlt, ohne daß Lichtleiter, Linsen oder sphärische Spiegel eingesetzt werden.
- Die strahlungsaktiven Halbleiter-Oberflächen der LED-Dioden werden so nahe am mikroskopierten Volumen positioniert, daß ihre Helligkeit ohne zusätzliche optische Fokussierung zur Belichtung der Mikroskopkamera ausreicht.

Das Verfahren hat weiter folgendes charakteristisches Merkmal:
- Die transparenten Plexiglas- oder Acrylglas-Körper, in welchen die Halbleiterelemente der handelsüblichen LED-Dioden eingegossen sind, werden bis dicht an die Halbleiter-Strahlungsquelle und formgünstig abgeschliffen, um die Distanz der Strahlungsquelle zum bestrahlten Volumen auf ein Minimum zu verringern.

Das Verfahren hat weiter die folgenden charakteristischen Merkmale:
- Das zur Belichtung verwendete LED-Diodenlicht wird in Lichtleiter eingekoppelt und wird von den Enden der Lichtleiter in das mikroskopierte Volumen gestrahlt.
- Die Abstrahlung der Lichtleiter kann durch eine zusätzliche Auskoppeloptik gebündelt werden.
- Die Richtung der Bestrahlung wird orientiert
   a) längs der optischen Achse des Objektivs für Hellfeld-Mikroskopie
   b) quer zur optischen Achse des Objektivs für Dunkelfeld-Mikroskopie und
   c) schräg für gewünschte Übergänge zwischen Dunkelfeld und Hellfeld.

Das Verfahren hat weiter folgende charakteristische Merkmale:
- Die belichtenden LED-Dioden strahlen ihr Licht zum Zweck der Auflichtbelichtung auf einen halbdurchlässigen Schrägspiegel oder Lochspiegel in den Strahlengang des Mikroskops.
- Je nach Einsatz eines Hellfeld- oder Dunkelfeld-Objektivs ergibt sich die Belichtung des mikroskopierten Volumens durch Fokussierung des LED-Lichts mit den Objektivlinsen oder mit einem sphärischen Spiegelkranz konzentrisch mit dem Objektiv.

Das Verfahren hat weiter folgendes charakteristisches Merkmal:
- Die LED-Dioden sind an der Innenwand des Mikroskoptubus eingebaut und erzeugen über einen Spiegelkranz wie beispielsweise bei handelsüblichen Auflicht-Dunkelfeld Objektiven eine gebündelte Belichtung des Probevolumens.

Das Verfahren hat weiter folgende charakteristische Merkmale:
- Das Licht einer LED-Diode wird mit einer Mikroskop-Kondensoroptik gebündelt und zum Probevolumen geführt.
- Das reelle Bild der hellen LED-Emissionsfläche wird nahe an die Objektebene oder genau in sie hinein verlegt, so daß das Probevolumen einerseits ausreichend hell und andererseits ausreichend homogen bestrahlt wird.

Eine Schaltung zur Realisierung des Verfahrens hat folgende charakteristische Merkmale:
- Ein elektronischer Trigger liefert in geeigneter Frequenz oder auf Tastendruck Triggerpulse.
- Die Pulse triggern in einer zweiten Schaltungsstufe 1 die Erzeugung von belastbaren Steuerpulsen mit definierter Zeitdauer von beispielsweise 0,3 µs.
- Die Steuerpulse aus dem getriggerten Pulsgeneratur steuern das Gate eines Feldeffekttransistors 2 auf Durchlaß.
- Durch die Öffnung des Transistors werden der LED-Diode 3 Pulsströme von ca. 5 A und mehr eingeprägt, wobei diese Stromstärke weit über dem vom Hersteller angegebenen Nennstrom liegt.
- Die hohen Strompulse regen die Diode zu einer intensiven Lumineszenz an, die hinreichend hell zur Belichtung des In situ Mikroskops ist.

Das Verfahren hat weiter folgende charakteristische Merkmale:
- Die LED-Diode 4, deren Glaskörper bis dicht an den Halbleiter heran abgeschliffen ist, ist dergestalt am Glasfenster 5 vor dem Objektiv 6 befestigt, daß sie mit hoher Intensität direkt in das Probevolumen 7 strahlt.
- Um einen kompakten und hermetisch abgeschlossenen Sensorkopf zu gewährleisten, werden die abgeschirmten elektrischen Zuleitungen 8 eng am Fenster gekapselt, dann über Bohrungen 9 in der Fensterfassung abgedichtet und in den Mikroskoptubus 10 geführt und an der Innenwand 11 zur Elektronik geführt.

Das Verfahren hat weiter folgende charakteristische Merkmale:
- Die LED-Diode 12 ist in einem eigenen Tubus 13 montiert, der am Mikroskoptubus 14c befestigt ist.
- Der Tubus 13 enthält eine Kondensoroptik 14, die das Licht in das Probevolumen 14a vor dem Mikroskopobjektiv 14b bündelt.
- Das reelle Bild der aktiven Dioden-Emissionsfläche wird von der Kondensoroptik so nahe an der scharf abgebildeten Objektebene erzeugt, daß letztere hell aber auch homogen ausgeleuchtet wird.

Eine Vorrichtung zur Durchführung des Verfahrens hat folgende charakteristische Merkmale:
- Die LED-Dioden 15 werden an Lichtfasern 16 gekoppelt, die an der Tubusinnenwand 17 bis zum Sichtfenster 18 geführt werden.
- Durch Bohrungen 19 durch die Fassung des Sichtfensters an der Stirnseite des Tubuskörpers gelangen die Lichtfasern in eine Führungskapillare 20, und werden von dieser durch die Partikeldispersion 21a an das Probevolumen 21 herangeführt.
- Die Lichtfaser endet bündig mit der Kapillare und ist dort fest und hermetisch dicht eingeklebt.
- Die Kapillare wird am Ende so ausgerichtet, daß entweder Dunkelfeld- oder Hellfeld-Mikroskopie oder Übergänge dazwischen erzielt werden.
- Ein reelles Bild der Partikel wird vom Objektiv 18a auf der Sensorfläche 24a der CCD-Kamera 24 entworfen und steht der Signal-Verarbeitung und Darstellung auf einem Monitor zur Verfügung.

Die Vorrichtung hat weiter folgende charakteristische Merkmale:
- Eine LED-Diode 22 strahlt nach optischer Strahlbündelung 23 über einen halbdurchlässigen Spiegel 24 von hinten in das Mikroskop.
- Durch das Objektiv 25 wird das Licht der Diode fokussiert und erzeugt eine Auflicht-Beleuchtung des Probevolumens 26 vor dem Objektiv.

Die Vorrichttung hat weiter folgende charakterische Merkmale:
- Symmetrisch zur optischen Achse des Mikroskops sind an der Innenwand des Tubus 27 synchronisierte LED-Dioden 28 mit Auskoppeloptik 29 angeordnet.
- Durch einen zum Objektiv konzentrischen sphärischen Spiegelkranz 30 wird das Diodenlicht schließlich in das Probevolumen 31 fokussiert.

Gegenstand der Erfindung ist nach alledem eine Sonde zur in situ Mikroskopie von bewegten Partikeln direkt in einer Partikeldispersion ohne Probennahme mit einer gepulsten Lichtquelle, einer Mikroskopoptik und einer Kamera. Die Lichtquelle besteht aus wenigstens einer LED (Elektrolumineszenzdiode), die zur Vermeidung der Bewegungsunschärfe und zur Erzeugung ausreichender Helligkeit mit kurzen elektrischen Strompulsen von typisch 1 µs Dauer oder darunter bei mehr als dem hundertfachen der typischen Gleichstromnennwerte des LED-Herstellers betrieben wird. Beim derzeitigen Stand der Technik von typisch 20 mA Gleichstromnennwerten des LED-Herstellers wird die LED mit typisch 5 A und mehr betrieben.

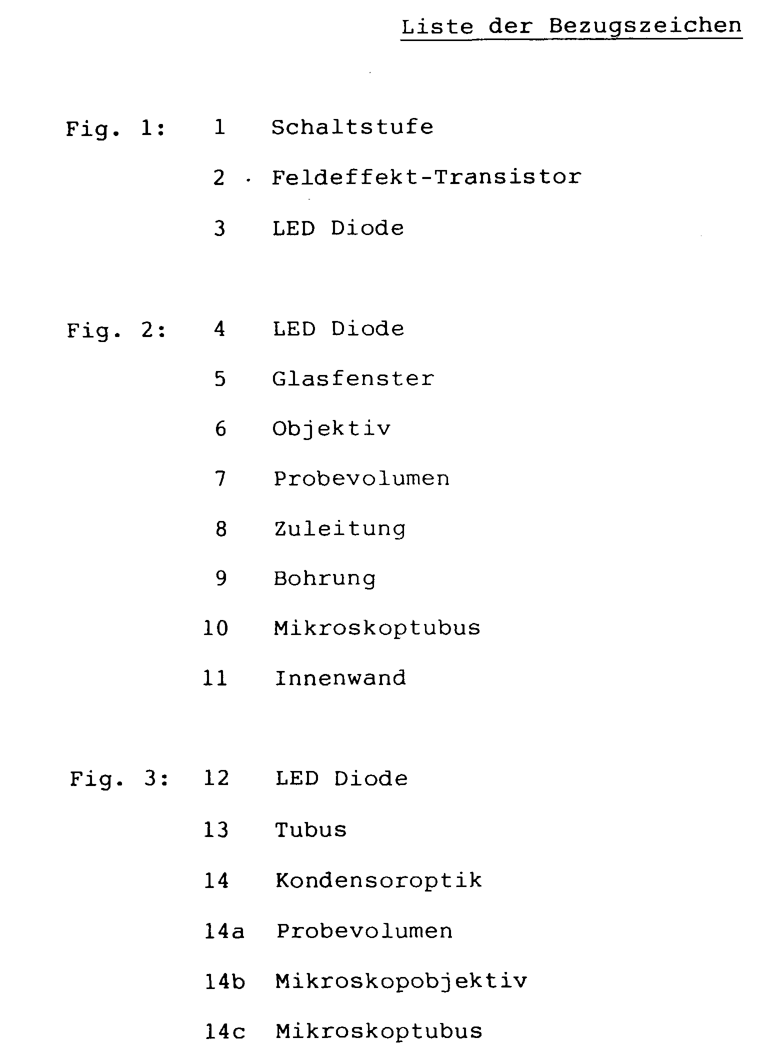

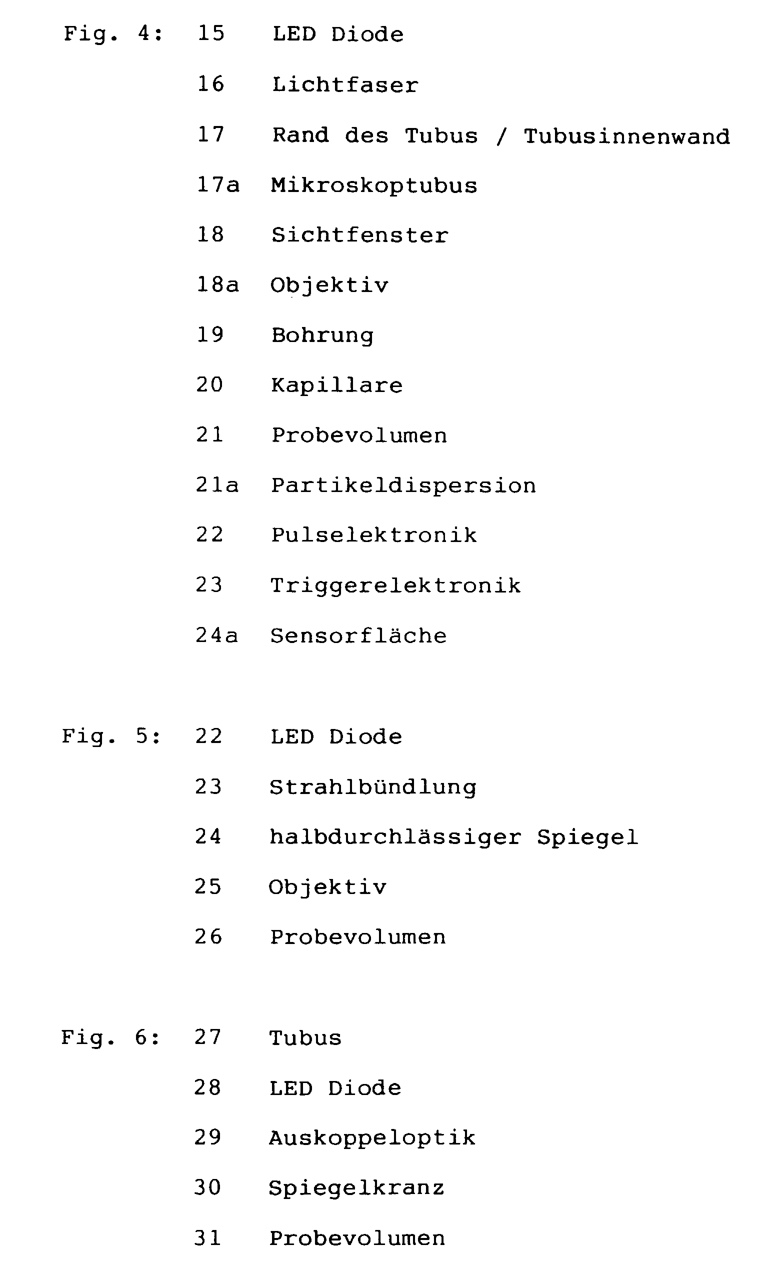

## Patentansprüche

1. Sonde zur in situ Mikroskopie von bewegten Partikeln direkt in einer Partikeldispersion mit einer gepulsten Lichtquelle, einer Mikroskopoptik und einer Kamera, dadurch gekennzeichnet, daß die Lichtquelle aus wenigstens einer LED (Elektrolumineszenzdiode) besteht, die mit kurzen elektrischen Strompulsen von typisch 1 µs Dauer oder darunter bei einer Stromstärke von mehr als dem hundertfachen des Gleichstromnennwerts des LED-Herstellers betrieben wird.

2. Sonde nach Anspruch 1, dadurch gekennzeichnet, daß die Sonde mit einer Videokamera, insbesondere CCD-Videokamera, und einer elektronischen Bilddatenverarbeitung ausgestattet ist, die zur Auswertung der inline-Mikroskopbilder in Echtzeit oder nachträglich bezüglich der Partikeleigenschaften wie beispielsweise Größe, Form oder Konzentration dient.

3. Sonde nach Anspruch 1 oder 2, dadurch gekennzeichnet, daß die Videokamera einen integrierten programmierbaren digitalen Signalprozessor aufweist, mit dem die Steuerung des CCD-Chips und die Bildverarbeitung erfolgt.

4. Sonde nach einem der Ansprüche 1 bis 3, dadurch gekennzeichnet, daß die Videokamera ein Display für mit dem Signalprozessor berechnete Parameter und Signalausgänge für diesen Parametern entsprechende Analogsignale hat.

5. Sonde nach einem der Ansprüche 1 bis 4, dadurch gekennzeichnet, daß sie ein Gehäuse mit einem integrierten miniaturisierten Videomonitor hat.

6. Sonde nach einem der Ansprüche 1 bis 5, dadurch gekennzeichnet, daß die LED das Mikroskopiervolumen direkt oder über plane Spiegel beleuchtet.

7. Sonde nach Anspruch 6, dadurch gekennzeichnet, daß die LED (4) einen transparenten Körper aus Kunststoff hat, in den ihre Halbleiter-Strahlungsquelle eingegossen ist, und daß dieser Körper bis dicht an die Halbleiter-Strahlungsquelle und formgünstig abgeschliffen ist.

8. Sonde nach Anspruch 6 oder 7, dadurch gekennzeichnet, daß die LED (4) an einem Glasfenster (5) vor dem Objektiv (6) befestigt ist und direkt in das Mikroskopiervolumen (7) strahlt.

9. Sonde nach Anspruch 8, dadurch gekennzeichnet, daß die LED (4) abgeschirmte elektrische Zuleitungen (8) hat, die eng am Fenster (5) gekapselt und durch Bohrungen (9) in der Fensterfassung abgedichtet in den Mikroskoptubus (10) hinein und an dessen Innenwand (11) entlang geführt sind.

10. Sonde nach einem der Ansprüche 1 bis 5, dadurch gekennzeichnet, daß die LED (15) das Mikroskopiervolumen über einen Lichtleiter (16) beleuchtet.

11. Sonde nach Anspruch 10, dadurch gekennzeichnet, daß dem Lichtleiter (16) eine Einkoppeloptik vorgeordnet und gegebenenfalls eine fokussierende Auskoppeloptik nachgeordnet ist.

12. Sonde nach Anspruch 10 oder 11, dadurch gekennzeichnet, daß die Beleuchtungsrichtung längs der optischen Achse des Objektivs für Hellfeld-Mikroskopie, quer zu der optischen Achse des Objektivs für Dunkelfeld-Mikroskopie oder schräg zu der optischen Achse des Objektivs für Ubergänge zwischen Hellfeld- und Dunkelfeldmikroskopie gewählt ist.

13. Sonde nach einem der Ansprüche 10 bis 12, dadurch gekennzeichnet, daß sich der Lichtleiter (16) entlang der Tubusinnenwand (17) an ein dem Objektiv vorgeordnetes Sichtfenster (18) und durch Bohrungen (19), die die Fassung des Sichtfensters (18) durchsetzen, in eine Führungskapillare (20) erstreckt, die der gewünschten Beleuchtungsrichtung entsprechend ausgerichtet ist.

14. Sonde nach Anspruch 13, dadurch gekennzeichnet, daß der Lichtleiter (16) bündig mit der Kapillare (20) endet und dort fest und hermetisch dicht in die Kapillare (20) eingeklebt ist.

15. Sonde nach einem der Ansprüche 1 bis 5, dadurch gekennzeichnet, daß zu der Mikroskopoptik ein halbdurchlässiger Schrägspiegel (24) oder Lochspiegel gehört, über den das Licht der LED (22) in den Strahlengang des Mikroskops einkoppelbar ist.

16. Sonde nach Anspruch 15, dadurch gekennzeichnet, daß die LED (22) nach optischer Strahlbündelung (23) über einen halbdurchlässigen Spiegel (24) von hinten in das Mikroskop strahlt, und daß das Objektiv (25) das Licht der LED (22) fokussiert und eine Auflicht-Beleuchtung des Mikroskopiervolumens (31) vor dem Objektiv (25) erzeugt.

17. Sonde nach einem der Ansprüche 1 bis 5, dadurch gekennzeichnet, daß konzentrisch mit dem Objektiv (25) ein sphärischer Spiegelkranz (30) angeordnet ist, durch den das Licht der LED (22) fokussierbar ist, und daß eine oder mehrere LED (28) an der Innenwand des Mikroskoptubus angeordnet sind.

18. Sonde nach einem der Ansprüche 1 bis 5, dadurch gekennzeichnet, daß die LED (12) das Mikroskopiervolumen über eine Mikroskop-Kondensoroptik (14) beleuchtet, die das Licht der LED (12) bündelt und ein reelles Bild der Halbleiter-Strahlungsquelle nahe der Objektebene oder genau in der Objektebene entwirft.

19. Sonde nach Anspruch 18, dadurch gekennzeichnet, daß die LED (12) in einem eigenen Tubus (13) montiert ist, der an dem Mikroskoptubus (14c) befestigt ist und die Kondensoroptik (14) enthält.

20. Schaltung für eine Sonde nach einem der Ansprüche 1 bis 19, dadurch gekennzeichnet, daß mit der LED (3) ein Feldeffekttransistor (2) in Reihe liegt, dessen Gate an einen Pulsgenerator (1) angeschlossen ist, der Steuerpulse der gewünschten Zeitdauer von typisch 1 µs oder darunter liefert.

21. Schaltung nach Anspruch 20, dadurch gekennzeichnet, daß der Pulsgenerator mit einem Trigger (23) angesteuert ist, der in vorgegebener Frequenz oder auf Tastendruck Triggerpulse liefert.

22. Schaltung nach Anspruch 20 oder 21, dadurch gekennzeichnet, daß der Trigger (23) die Öffnungszeit der CCD-Kamera mit den Pulsen der LED (3) synchronisiert.
